# EUROPEAN PATENT APPLICATION

(11) **EP 4 718 578 A1**
(43) Date of publication of application: **01.04.2026**
(21) Application number: 24170598.7
(22) Date of filing: 16.04.2024
(51) Int. Cl.: H01M 10/613, H01M 50/211

(54) **BATTERY PACK STACK**

(71) Applicant: Lilium GmbH, 82131 Gauting (DE)
(72) Inventor: WIEGAND, Daniel, 82131 Gauting (DE); REICHMANN, Benjamin, 82131 Gauting (DE)
(74) Representative: Ter Meer Steinmeister & Partner

(57) **Abstract**

The present invention relates to a battery pack stack (10), comprising multiple pouch-type battery cells (12), a pouch, at least one positive and one negative electrode tab (12a, 12b) provided to corresponding electrode plates, and a cooling device (20) which is adapted to cool the battery cells (12), comprising a plurality of heat transfer pads (36), each of which is applied to one of the electrode tabs (30, 32) inside and/or outside the pouch, and a linking structure (38) interconnecting the heat transfer pads (36) along the stacking direction (S) of the electrode assembly.

## Description

The present invention relates to a battery pack stack and an electrical propulsion VTOL aircraft comprising at least one such battery assembly.

Battery development has been in the focus of research for the last decades and belongs to the major challenges of modern technology. While for example handheld user devices have long been powered by rechargeable battery units, under the doctrine of "electrifying everything" in recent years an increasing number of road vehicles have also been of the electrical propulsion type and it is projected that in the foreseeable future, at least certain types of commercial airliners will also be electrically powered. Additionally, large central or decentralized electrical storage facilities will have to be built and operated as part of the transition to 100% renewable energies to serve as buffers for time periods in which for example solar and wind energy are not available to a sufficient degree.

As such, a large number of different types of battery systems are nowadays known, which are for example specifically designed for different growing markets including the aforementioned portable electronic devices, electric vehicles and also industrial power storage devices. Depending on the particular application, different types of batteries have been developed to meet different requirements with regard to energy density, temperature range, weight and the size of the batteries as well as their lifetime and manufacturing costs.

One such example of a relatively recently developed type of battery cell are pouch-type battery cells which are known to be characterized by a low weight and high energy density. Such pouch-type battery cells usually consist of lithium-ion type electrode assemblies comprising at least one cathode, anode and separator which are accommodated within a flexible pouch made from a laminated film.

The laminated film of the pouch conventionally includes an aluminum layer sandwiched between two polymer layers in order to achieve the desired mechanical properties thereof while minimizing weight and form factor of the cell. Herein, the polymer layers contribute to mechanical stability and electrical insulation, whereas the aluminum layer forms a barrier against permeation of gases and moisture. Such laminated films can be manufactured at low costs and low weight, thus keeping the non-electrochemically active mass of the battery at a minimum and increasing the energy density of the battery as a whole.

It is, however, still difficult to develop and manufacture high-energy battery assemblies based on pouch-type battery cells for driving electric vehicles or other high-energy industrial applications, in particular when more than 20 kW/h of electric energy storage capability are required. Specifically, in order to achieve a high energy output, a plurality of cells needs to be stacked and operated in such battery assemblies in a confined space. As a result, thermal energy, i.e. heat, generated during operation or during charging of the cells cannot easily be dissipated and transported outside the battery to a heat sink or to the ambient air.

In order to avoid an uncontrolled increase of the temperature within a stack of pouch-type battery cells during periods of high loads, extensive active and/or passive cooling needs to be provided for conventional battery cells, which increases the size and weight as well as the manufacturing costs of the resulting battery assemblies comprising such cells. For example, conventional battery assemblies comprising a stack of rectangular pouch-type battery cells oftentimes use active cooling means for cooling the edges of the battery stack. However, since the in-plane thermal conductivity of the pouch cells, i.e. along the pouch surface, is limited, uniform cooling of the cells is difficult and temperature gradients across the cell areas remain, which reduce performance and lifetime of the corresponding batteries. Furthermore, thermal management systems for pouch cells that interface with the large surface area of the cells are complex and heavy.

The above-mentioned problems become even more pronounced when pouch-type battery cells are conceived for the use in electric aircraft, in particular for providing energy to electric aircraft engines which temporarily require a particularly high energy output, for example during starts. Furthermore, in addition to the requirements typically encountered in electric road vehicles, in an aircraft, the requirements for high energy density in order to reduce the overall weight of the aircraft thus vastly improving its efficiency as well as for fast charging for maximizing potential operating times are particularly high. In addition, thermal management is a safety issue as well and therefore becomes even more important in an aircraft battery.

In view of these challenges, it is an object of the present invention to provide a battery pack stack with improved cooling properties, which in turn leads to higher possible power output as well as increased lifetime of the corresponding battery cells.

For this purpose and in order to solve the above discussed problems, a battery pack stack according to the present invention comprises multiple pouch-type battery cells, a pouch, at least one positive and one negative electrode tab provided to corresponding electrode plates, and a cooling device which is adapted to cool the battery cells and comprises a plurality of heat transfer pads, each of which is applied to one of the electrode tabs inside and/or outside the pouch case, and a linking structure interconnecting the heat transfer pads along the stacking direction of the electrode assembly.

It is an achievement of the inventors of the present invention to have realized that by providing heat transfer pads for removing heat from the corresponding electrode tabs, it becomes possible to efficiently cool pouch-type battery cells with relatively light and easy to manufacture cooling arrangements. By further providing the linking structure interconnecting the individual heat transfer pads along the stacking direction of the battery cell, the heat produced within the battery pack stack is distributed in an improved manner such that removing the heat from the battery cells is facilitated and temperature gradients within the battery pack stack are reduced.

In particular, the heat transfer pads may be applied to the upper and lower sides of the electrode tabs of neighboring electrode plates in an alternating manner along the stacking direction, wherein in this particular case, the stacking direction is assumed to be oriented vertically. It shall be pointed out that such battery cells can of course also be stacked along a different direction and that the assumption of a vertical stacking is merely made for improved readability while the alternating application of the heat transfer pads can universally be employed. By applying the heat transfer pads in this manner, the application thereof becomes even easier and the heat transfer can be performed in a more uniform manner, while in alternative embodiments it is of course also possible to apply the heat transfer pads according to a different pattern, for example all on the same side of the electrode tabs with respect to the stacking direction.

Alternatively or additionally, the heat transfer pads may be applied to the electrode tabs by means of a thermally conductive adhesive, such that it can be assured that the heat transfer properties of the heat transfer assembly are maximized.

In order to remove the heat collected by the heat transfer assembly from the pouch-type battery cell, the linking structure may be connected to an active and/or passive cooling system of any known type which may for example be positioned in the immediate vicinity of the battery pack stack.

In particular, the linking structure may extend outside the pouch for connection with an external cooling system in order to effectively transfer heat outside the pouch-type battery cell where it can be dissipated by the external cooling system. Said cooling system may form part of a superordinate structure in which the battery cell is embedded in order to increase the integration thereof in complex use cases. Alternatively or additionally, the linking structure between the hear-transfer pads may be formed in length-adjustable manner in order to be able to compensate for thermal expansion of the battery cells or similar effects. In particular, in an embodiment in which the linking structure is adapted to circulate cooling fluid therein (as will be discussed in the following), the corresponding piping may be formed in a curled manner to provide additional tolerance ranges for extension thereof.

While in certain embodiments, the linking structure may be made from solid material with beneficial properties concerning thermal conductivity, it may also be adapted to circulate cooling fluid therein. For this purpose, the linking structure may comprise suitable piping for transporting said cooling fluid from and to the individual heat transfer pads, which themselves may also be formed in such a manner that the cooling fluid comes into contact or least close proximity to the respective electrode tabs. The linking structure may furthermore comprise suitable inlet and outlet ports for the cooling fluid which may be connected to an external cooling fluid circuit, for example in an integrated manner with additional components of the superordinate structure which also require cooling.

In particular, the cooling circuit may have wall thicknesses of 0.1 - 0.7 mm, preferably 0.2 - 0.3 mm, which increases cooling efficiency but at the same time reduces the risk of leakages. Alternatively or additionally, the cooling circuit may be an integral pipe-like structure and made of silicone. Such cooling circuits may in particular be obtained by an extrusion process, which allows for a cost-efficient production of large quantities of such circuits.

Also, the heat transfer tabs may comprise a plurality of chambers to transport a cooling fluid, which allows for keeping the surface of the heat transfer pads as flat as possible. In contrast, one single chamber would have to be formed to a circular tubelike section when filled with cooling fluid, reducing the surface by which the heat transfer can take place. Additionally or alternatively, the heat transfer pads may comprise at least one internal support rib extending between its upper and lower walls in the stacking direction. Said at least one support rib is provided to prevent bending of the walls of the heat transfer pads away from the electrode tabs during use of the battery cell stack in order to ensure maximum heat transfer from the electrode tabs to the cooling device. Furthermore, said at least one rib may also cause an elongation of the flow path of the cooling fluid inside the heat transfer pad, for example by forming the at least one rib in a meandering manner, which may further increase its cooling efficiency.

While different types of cooling fluid may be employed in the battery pack stack according to the invention, non-conductive cooling fluids such as Novec (registered trademark) are especially suitable.

Furthermore, the linking structure may comprise a length-adjustable structure which increases the flexibility thereof, and/or the battery cells may be of a two-sided type, which may further improve their cooling, as it can take place from both sides.

The battery pack stack according to the present invention may further comprise a thermal management system adapted to control the temperature of the pouch-type battery cells and including active and/or passive cooling means.

Furthermore, and as already briefly discussed above, the present invention relates to an electrical propulsion VTOL aircraft, comprising at least one pair of wings, a fuselage, a plurality of electrically driven propulsion motors, which are rotatable between a plurality of operating orientations, and at least one battery assembly as discussed above adapted to provide electrical power for driving the propulsion motors.

Further features and advantages of the present invention will become even clearer from the following description of an embodiment thereof when viewed together with the enclosed drawings. These show in particular:
- Figure 1: a schematic view of a battery pack stack according to an embodiment of the present invention;
- Figure 2: a front view of one of the battery cells of the battery pack stack of

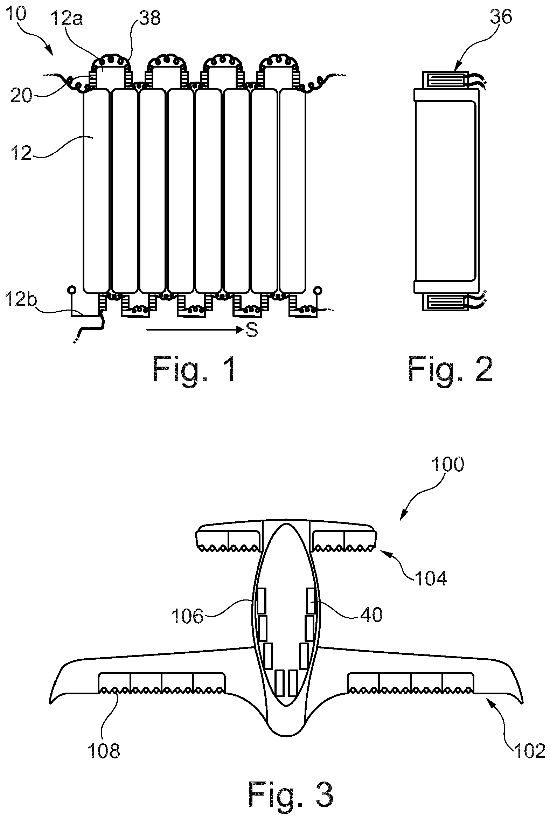

- Figure 1;: and
- Figure 3: a schematic plan view of electrical propulsion VTOL aircraft according to the present invention.

Figure 1 shows a battery pack stack 10 according to an embodiment of the present invention in a schematic cross section view. The battery cell comprises a plurality of pouch-type battery cells 12 stacked along a stacking direction S. The battery pack stack 10 further comprises positive and negative electrode tabs 12a, 12b which are provided to corresponding electrode plates of the battery cells 12.

Even though not shown in figure 1 for improved readability, the battery pack stack 10 also comprises a pouch, for example made from a laminated film, comprising at least two polymer layers and a metal barrier layer disposed between neighboring polymer layers as well as a heat spreading layer made from a thermally conductive material.

It shall also be pointed out that the battery pack stack 10 additionally comprises a cooling device 20, which is adapted to cool the battery cells 12 and comprises a plurality of heat transfer pads 36 each of which is applied to one of the electrode tabs 12a, 12b, as can best be understood from Figure 2.

The cooling device 20 further comprises a linking structure 38 interconnecting the heat transfer pads 36 along the stacking direction S of the electrode assembly. Said linking structure 38 extends outside the pouch for connection with an external cooling system not depicted in figure 1. In certain embodiments, the linking structure is adapted to circulate cooling fluid therein and for this purpose comprises suitable internal piping connected to an external fluid circuit as well as inlet and outlet ports for providing said connection. As can be seen in figure 1, the linking structure 38 is formed in a curled manner to be length-adjustable, such that it can extend by a certain amount in case of thermal expansion of the battery cells 12 or similar scenarios.

It shall also be pointed out that the heat transfer pads 36 are applied to the upper and lower sides of the electrode tabs 12a, 12b of neighboring electrode plates in an alternating manner along the stacking direction S, wherein the heat transfer pads 36 are applied to the electrode 12a, 12b tabs by means of a thermally conductive adhesive. It can also be seen in figure 2 that the corresponding heat transfer pads comprise at least one internal support ribs extending between its upper and lower walls in the stacking direction S. Said support ribs on the one hand prevent bending of the walls of the heat transfer pads away from the electrode tabs and on the other hand also cause an elongation of the flow path of the cooling fluid inside the respective heat transfer pads.

Lastly, figure 3 in plan view shows an electrical propulsion VTOL aircraft 100 according to the present invention comprising two pairs of wings 102, 104 and a fuselage 106. Attached to the wings 102, 104 are provided a plurality of electrically driven propulsion motors 108, which are rotatable between a plurality of operating orientations around axes substantially extending along the span direction of the wings 102, 104. The electrically driven propulsion motors 108 are powered by a plurality of battery assemblies 40 as described above which are positioned within the fuselage 106 of the aircraft 100 and connected for providing electrical power to the motors 108 during their operation.

## Claims

1. Battery pack stack (10), comprising:
- multiple pouch-type battery cells (12)
- a pouch,
- at least one positive and one negative electrode tab (12a, 12b) provided to corresponding electrode plates; and
- a cooling device (20) which is adapted to cool the battery cells (12), comprising:
- a plurality of heat transfer pads (36), each of which is applied to one of the electrode tabs (12a, 12b) inside and/or outside the pouch ; and
- a linking structure (38) interconnecting the heat transfer pads (36) along the stacking direction (S) of the electrode assembly.

2. Battery pack stack (10) according to claim 1,
wherein the heat transfer pads (36) are applied to the upper and lower sides of the electrode tabs (30, 32) of neighbouring electrode plates (16, 18, 20) in an alternating manner along the stacking direction (S).

3. Battery pack stack (10) according to any of the preceding claims,
wherein the heat transfer pads (36) are applied to the electrode tabs (30, 32) by means of a thermally conductive adhesive.

4. Battery pack stack (10) according to any of the preceding claims,
wherein the cooling circuit is connected to an active and/or passive cooling system.

5. Battery pack stack (10) according to any of the preceding claims,
wherein the linking structure (38) extends outside the pouch for connection with an external cooling system,
and/or wherein the linking structure (38) between the hear-transfer pads (36) is formed in length-adjustable manner.

6. Battery pack stack (10) according to any of the preceding claims,
wherein the cooling circuit is adapted to circulate cooling fluid therein.

7. Battery pack stack (10) according to claim 6,
wherein the cooling circuit has wall thicknesses of 0.1 - 0.7 mm, preferably 0.2 - 0.3 mm.

8. Battery pack stack (10) according to any of claims 6 and 7,
wherein the cooling circuit is an integral pipe-like structure and made of silicone.

9. Battery pack stack (10) according to any of claims 6 to 8,
wherein the cooling circuit is obtained by an extrusion process.

10. Battery pack stack (10) according to any of claims 6 to 9,
wherein the heat transfer pads (36) comprise a plurality of chambers to transport a cooling fluid and/or
wherein the heat transfer pads (36) comprise at least one internal support rib extending between its upper and lower walls in the stacking direction (S).

11. Battery pack stack (10) according to any of claims 6 to 10,
wherein the cooling fluid is a non-conductive cooling fluid.

12. Battery pack stack (10) according to any of the preceding claims,
wherein the linking structure comprises a length-adjustable structure.

13. Battery pack stack (10) according to any of the preceding claims,
wherein the battery cells (12) are of the two-sided tab type.

14. Battery pack stack (10) according to any of the preceding claims,,
further comprising a thermal management system (48) adapted to control temperature of the pouch-type battery cells (12) and including active and/or passive cooling means.

15. Electrical propulsion VTOL aircraft (100), comprising:
- at least one pair of wings (102, 104);
- a fuselage (106);
- a plurality of electrically driven propulsion motors (108), which are rotatable between a plurality of operating orientations; and
- at least one battery assembly (40) according to any of claims 8 and 9 adapted to provide electrical power for driving the propulsion motors (108).
